# FASCICULE DE BREVET EUROPEEN

(11) **EP 2 887 519 B1**
(45) Date de publication et mention de la délivrance du brevet: **04.05.2022**
(21) Numéro de dépôt: 14198743.8
(22) Date de dépôt: 18.12.2014
(51) Int. Cl.: H02M 1/12, H02M 7/493

(54) **Dispositif de conversion de puissance électrique modulaire et reconfigurable**
Modulare und rekonfigurierbare Vorrichtung zur Umwandlung von elektrischer Leistung
Modular, reconfigurable device for converting electric power

(30) Priorité: 18.12.2013 FR 1302974
(43) Date de publication de la demande: 24.06.2015
(60) Demande divisionnaire: 22156759.7
(73) Titulaire: THALES, 92400 Courbevoie (FR)
(72) Inventeur: Lacaux, Frédéric, 78400 CHATOU (FR); Bruzy, Christophe, 78400 CHATOU (FR); Casutt, Jacques, 78400 CHATOU (FR)
(74) Mandataire: Marks & Clerk France

(56) Documents cités:
- WO-A2-2011/160644
- FR-A1- 2 899 734
- US-A1- 2004 017 689
- US-A1- 2012 106 210
- US-B1- 7 564 703

## Description

L'invention concerne un dispositif d'alimentation modulaire et reconfigurable d'une pluralité de charges à partir d'un réseau de fourniture d'énergie électrique. Plus précisément, elle porte sur un dispositif d'alimentation électrique pour aéronef capable de limiter les courants de recirculation générés lors de la mise en parallèle de convertisseurs dédiés à l'alimentation d'une même charge.

Les avions gros porteurs comportent de plus en plus d'équipements électriques embarqués. Ces équipements sont de nature très variée et leur consommation énergétique est très variable dans le temps. A titre d'exemple, les commandes de vols aéronef, les systèmes de climatisation et d'éclairage internes sont en fonctionnement quasi continu alors que les systèmes de démarrage moteur, les systèmes de freinage électrique, ou encore les systèmes de sécurité redondants comme des commandes de gouverne, ne sont utilisés que pour de courtes durées au cours d'une mission.

Généralement, l'aéronef dispose d'un réseau de fourniture d'énergie électrique triphasé permettant l'alimentation de l'ensemble des équipements électriques appelés charges par la suite. Les différentes charges peuvent nécessiter des apports énergétiques différents en tension et en nature de courant, alternatif ou continu. Par ailleurs, les charges peuvent être plus ou moins tolérantes aux perturbations du réseau électrique qui les alimente. Dans la plupart des systèmes d'alimentation électrique aujourd'hui embarqués sur aéronef, on associe à chaque charge son propre convertisseur et son réseau de filtrage dédié. On a tenté de mettre en œuvre une structure d'alimentation électrique plus modulaire, permettant d'allouer de manière dynamique un ou plusieurs convertisseurs à des charges électriques en fonction des besoins en puissance de celles-ci. On connait en particulier de la demanderesse, la demande de brevet publiée sous la référence FR 2899734 décrivant le principe d'un dispositif d'alimentation électrique modulaire. La figure 1 de la présente demande illustre le principe d'une telle architecture électrique modulaire. Un réseau de fourniture d'énergie électrique 10 comprend par exemple plusieurs générateurs électriques 11 à bord de l'aéronef. Le réseau peut également comprendre des batteries de stockage d'énergie électrique. Il peut aussi comprendre des moyens de liaison à un réseau d'alimentation électrique au sol, permettant l'alimentation électrique de l'aéronef stationné sur une piste. Le réseau de fourniture d'énergie électrique 10 comprend des moyens de conversion 12 et de filtrage 13 permettant de mettre en œuvrele signal électrique généré par les générateurs 11 et transmis au réseau de bord. Ce réseau de fourniture d'énergie électrique 10 permet l'alimentation d'une pluralité de charges 14. Il peut s'agir de systèmes de climatisation ECS, pour l'acronyme anglo-saxon *Environmental Control Systems,* de systèmes de démarrage moteur MES, pour l'acronyme anglo-saxon *Main Engine Start,* ou de pompes hydrauliques EMP, pour l'acronyme anglo-saxon *Electro Mechanical Pump* mises en œuvre par exemple pour la commande de gouvernes de vol.

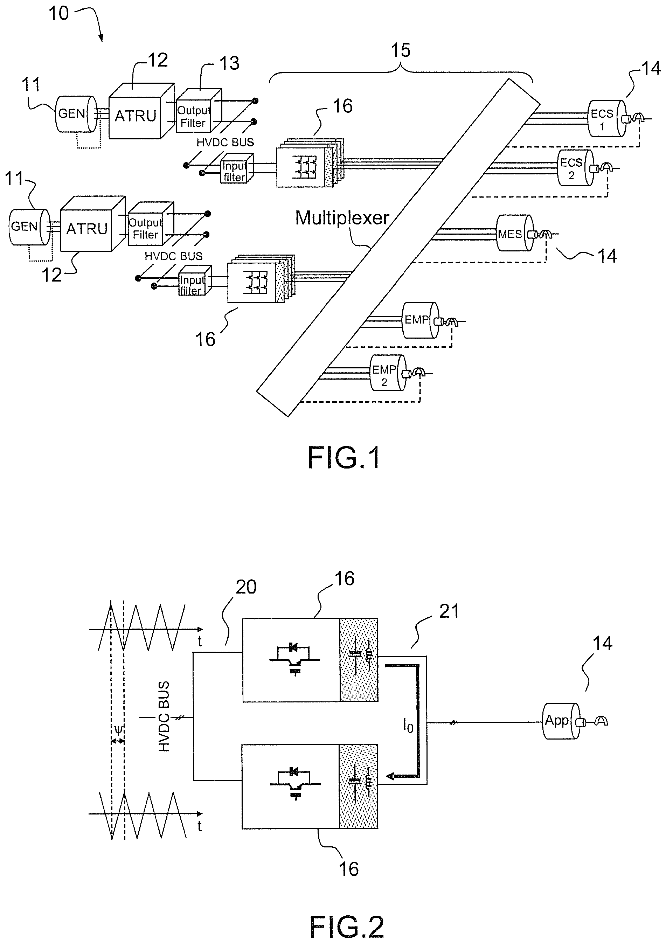

Entre le réseau de fourniture d'énergie électrique 10 et la pluralité de charges 14, un dispositif d'alimentation modulaire 15 a pour but d'allouer en temps réel à chaque charge un ou plusieurs convertisseurs 16 en fonction des besoins en puissance de la charge. Il est envisagé de combiner en parallèle plusieurs convertisseurs 16 permettant de fournir le niveau de puissance nécessaire à une charge 14. La mise en parallèle de convertisseurs 16, par une allocation en temps réel pilotée par un organe de commande , à la pluralité de charges 14, permet d'optimiser la puissance de conversion embarquée et donc de limiter le poids et le coût des éléments de conversion. Pour réduire le bruit électrique et être capable de respecter des exigences EMI, pour l'acronyme anglo-saxon *Electro Magnetic Interference,* on a recours à des techniques de filtrage et d'entrelaçage des convertisseurs associés en parallèle. L'entrelaçage des signaux de deux convertisseurs en parallèle est illustré sur la figure 2. Le filtrage intégré dans les convertisseurs est optimisé par l'entrelaçage en temps réel à la fois à l'entrée 20 des convertisseurs 16, du coté réseau de fourniture d'énergie électrique 10, et à la sortie 21 des convertisseurs 16, du coté charge électrique 14. La fréquence de découpage et le type de commande d'ouverture de rapport cyclique, ou PWM, peuvent aussi être adaptés en temps réel pour optimiser la taille et le poids des filtres.

La mise en œuvre d'un dispositif d'alimentation électrique modulaire et reconfigurable repose donc sur la capacité à paralléliser et entrelacer plusieurs convertisseurs de manière dynamique. La mise en parallèle et/ou l'entrelaçage se heurte pourtant à des difficultés liées notamment à la génération de courants de recirculation entre les convertisseurs. Ces courants de recirculation augmentent significativement le courant total vu par les composants actifs des convertisseurs. Pour supporter ces courants élevés, un surdimensionnement important des composants devient nécessaire. L'adaptation des convertisseurs aux courants de recirculation par un dimensionnement approprié des composants actifs (sur le plan thermique, électrique, EMI) est en pratique peu réaliste ; le poids, le volume et le coût d'un tel convertisseur étant inadapté.

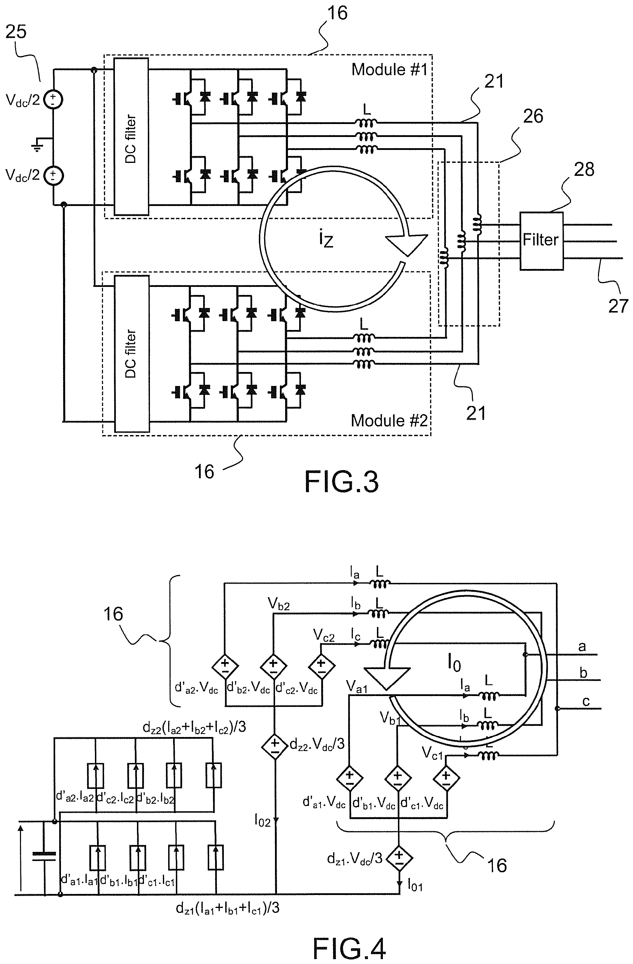

Pour s'affranchir des difficultés posées par la génération de courants de recirculation, une solution envisagée consiste à mettre en œuvre entre les convertisseurs associés en parallèle une inductance d'interphase, aussi appelée self d'interphase. La figure 3 illustre le principe de l'utilisation d'une self d'interphase pour la combinaison en parallèle de deux convertisseurs. Dans cet exemple, deux convertisseurs 16 sont alimentés en parallèle par une même source électrique 25. Les sorties 21 des deux convertisseurs 16 sont reliées à une self d'interphase 26. La self d'interphase 26 assemble les signaux des sorties 21 des convertisseurs 16 en un signal de sortie 27. L'association en parallèle de deux convertisseurs 16 génère des courants de recirculation représentés et référencés i_{z} sur la figure 3. La self d'interphase 26 est utilisée pour générer une impédance de zéro séquence importante permettant de réduire les courants de recirculation, en particulier les courants de recirculation hautes fréquences. Cette solution consiste à connecter une a une chacune des trois phases des deux convertisseurs au moyen d'une self d'interphase. Cette solution permet de limiter efficacement les courants de recirculation, mais son inconvénient majeur est l'ajout d'un élément entre les convertisseurs. Pour une architecture d'alimentation électrique complexe, mettant en œuvre un grand nombre de sources et de charges électriques, il est nécessaire d'ajouter autant de self d'interphase que de combinaisons envisagées de convertisseurs. En outre, le filtrage représenté par le module 28 sur la figure 3, doit être réalisé en sortie de la self d'interphase. Autrement dit, l'ajout d'une self d'interphase entre les convertisseurs, implique de mettre en œuvre un système de filtrage centralisé, et non distribué à l'intérieur de chacun des convertisseurs. Le recours à une self d'interphase et donc à un filtrage centralisé, pour chaque combinaison de convertisseurs envisagée limite la modularité de l'architecture. Il est uniquement possible de basculer de façon statique, entre des configurations prédéfinies, imposées par la structure des selfs d'interphase. Le nombre et la masse des selfs d'interphase peut devenir significatif et en pratique limite la modularité et la reconfigurabilité à un faible nombre de configurations.

Le document US2004/017689 décrit un système de contrôle de courant de recirculation pour plusieurs convertisseurs de puissance couplés en parallèle, comprenant des bobines en mode commun, des contrôleurs de rétroaction de courant de recirculation et des contrôleurs de convertisseurs. Ce système n'est pas complètement modulaire.

Le document US 7564703 décrit un appareil pour réduire les courants de recirculation résultant quand des convertisseurs sont montés en parallèle, en convertissant la tension continue aux bornes de bus à courant continu positif et négatif de tensions alternatives triphasées sur des première, deuxième et troisième lignes de sortie de courant alternatif. Cet appareil ne permet pas une application dans le cas de l'entrelaçage et est difficilement implémentable pour un système modulaire.

Le document US2012/106210 décrit des systèmes de conversion de puissance et des bobines intégrées à multi-phase fournissant des rapports élevés d'inductance de mode commun à mode différentiel, de forme circulaire ou triangulaire, pour le filtrage différentiel de courant et le blocage de tension de mode commun dans des applications de conversion de puissance, et ne traite que de la structure et du design d'une inductance intégrée en monobloc.

Le document WO2011/160644 décrit un procédé de commutation PWM destiné à la commande d'un convertisseur comprenant une pluralité de jambes de convertisseur parallèles par phase, et d'un convertisseur comprenant une pluralité de jambes de convertisseur parallèles dans chaque phase. Ce document ne traite que d'un seul convertisseur.

En résumé, la mise en œuvre d'une architecture d'alimentation électrique modulaire capable de distribuer la capacité de conversion en fonction des besoins instantanés en puissance électrique des différentes charges électriques présente de nombreux bénéfices. Mais on a constaté que l'association en parallèle de convertisseurs est en pratique délicate en raison des courants de recirculation générés entre les convertisseurs. Ce problème reste à résoudre car la solution immédiate consistant à disposer une self d'interphase entre convertisseurs associés en parallèle ne permet pas une modularité suffisante. L'invention a pour but un dispositif de conversion de puissance modulaire et reconfigurable palliant ces difficultés.

A cet effet, l'invention a pour objet un dispositif d'alimentation d'une pluralité de charges à partir d'un réseau de fourniture d'énergie électrique selon les revendications 1 et 6 et d'autres avantages sont selon les revendications dépendantes.

L'invention sera mieux comprise et d'autres avantages apparaîtront à la lecture de la description détaillée des modes de réalisation donnés à titre d'exemple sur les figures suivantes.
La figure 1, déjà présentée, représente un exemple d'architecture d'alimentation électrique modulaire et reconfigurable envisagée dans l'état connu de la technique,
la figure 2, déjà présentée, illustre le principe de l'entrelaçage entre deux convertisseurs associés en parallèle,
la figure 3, déjà présentée, illustre le principe de l'utilisation d'une self d'interphase pour l'association en parallèle de deux convertisseurs,
la figure 4 illustre le principe de la génération de courants de recirculation liée à l'association de convertisseurs en parallèle,
les figures 5a et 5b représentent deux modes de réalisation d'un dispositif d'alimentation électrique comprenant des moyens pour limiter des courants de recirculation hautes fréquences ,
la figure 6 représente un troisième mode de réalisation d'un dispositif d'alimentation électrique comprenant des moyens pour limiter des courants de recirculation hautes fréquences ,
la figure 7 représente un quatrième mode de réalisation d'un dispositif d'alimentation électrique comprenant des moyens complémentaires pour limiter des courants de recirculation basses fréquences,
la figure 8 représente un cinquième mode de réalisation d'un dispositif d'alimentation électrique comprenant des moyens pour annuler des différences de tensions de mode commun,
la figure 9 représente l'association en parallèle de N convertisseurs au moyen d'un dispositif d'alimentation électrique selon le premier mode de réalisation,
la figure 10 représente l'architecture fonctionnelle d'un organe de commande pouvant être mis en œuvre dans le dispositif d'alimentation,
la figure 11 représente un mode de réalisation d'un module de pilotage bas niveau de l'organe de commande,
les figures 12a et 12b représentent un mode de réalisation d'un module de pilotage intermédiaire de l'organe de commande,
la figure 13 représente un mode de réalisation d'un module de pilotage système de l'organe de commande,
la figure 14 représente un transformateur de mode commun avec un circuit à trois jambes,
la figure 15 représente une structure magnétique compacte et monobloc intégrant les composants de transformateur de séquence zéro avec le filtrage de mode commun et de mode différentiel pour un convertisseur de type onduleur / redresseur,
la figure 16 représente un exemple d'implémentation d'un ensemble magnétique monobloc compact regroupant les éléments magnétiques nécessaires au filtrage de mode commun et de mode différentiel pour un convertisseur de forte puissance de type onduleur / redresseur triphasé.

Par souci de clarté, les mêmes éléments porteront les mêmes repères dans les différentes figures.

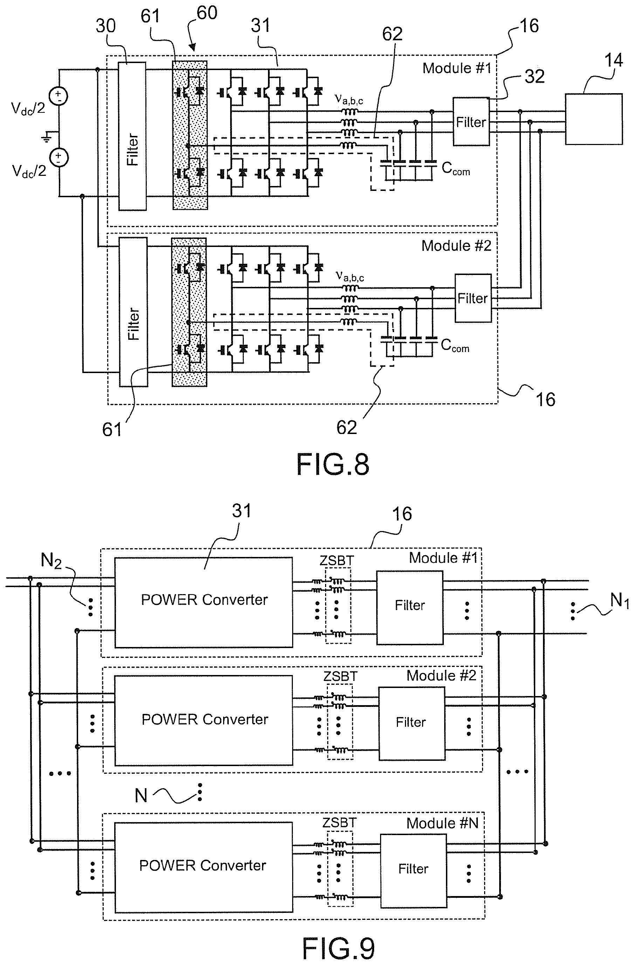

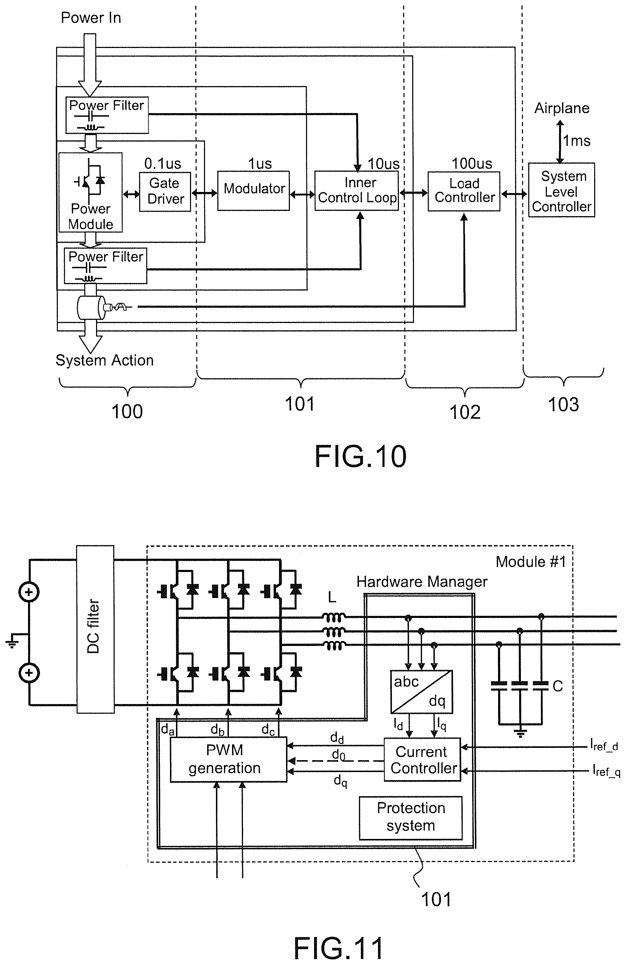

Les figures 4 à 8 décrivent plusieurs modes de réalisation de l'invention dans le cas le plus courant d'une alimentation des convertisseurs 16 par un réseau d'alimentation continu. Les charges 14 sont alimentées par des tensions alternatives à trois phases. Autrement dit, pour chacun des convertisseurs 16, l'entrée 20 comprend deux polarités et la sortie 21 comprend trois phases. Ce choix correspond au cas le plus répandu dans le domaine aéronautique. Ce choix n'est toutefois pas limitatif de la présente invention. Il est aussi envisagé de mettre en œuvre l'invention dans des configurations différentes, en nature de courant/tension et en nombre de phase, tant en entrée qu'en sortie des convertisseurs. Dans ce sens, les figures 9 et 10 décrivent le cas de convertisseurs associés en parallèle pour l'alimentation de charge à N1 phases à partir d'un réseau de fourniture d'énergie électrique à N2 phases.

La **figure 4** illustre le principe de la génération de courants de recirculation liée à l'association de convertisseurs en parallèle. La mise en parallèle et/ou l'entrelaçage de plusieurs convertisseurs est susceptible de générer deux types de courants de recirculation :
- des courants de recirculation hautes fréquences, générés par l'interaction des découpages des différents convertisseurs, et
- des courants de recirculation basses fréquences, dus à des différences dans les paramètres de commandes des différents convertisseurs.

Il est possible de modéliser ce phénomène au moyen d'une modélisation dite par « switching functions » représentée sur la figure 4. Dans ce cas où deux convertisseurs sont associés en parallèle, la modélisation montre que le courant de recirculation est un courant de mode commun, où dans chaque convertisseur, la somme des courants de phases, iₐ+i_{b}+i_{c}, n'est pas nulle mais égale à un courant i₀ circulant entre les deux convertisseurs. Le courant i₀ est généré en raison des écarts de tension de mode commun entre les deux convertisseurs à chaque période de découpage du convertisseur.

Pour limiter les courants de recirculation, une première approche théorique consiste à créer une impédance de séquence zéro forte entre les convertisseurs. Cette impédance élevée permet de limiter l'évolution temporelle de courant di/dt résultante des différences de tensions de mode commun des convertisseurs. Cette approche peut par exemple être implémentée en ajoutant une self d'interphase entre convertisseurs comme décrit précédemment. La mise en œuvre d'une self d'interphase entre chaque phase des convertisseurs permet de forcer les couples de courants de phase (iₐ, iₐ'), (i_{b}, i_{b}') et (i_{c}, i_{c}') à des valeurs proches de zéro. Cela revient à créer une impédance de séquence zéro forte qui s'oppose à la création d'un courant i₀ entre convertisseurs. On a eu l'occasion de préciser toutefois les inconvénients en termes de modularité de cette solution avec une self d'interphase extérieure aux convertisseurs.

Une seconde approche théorique consiste à annuler les différences de tensions de mode commun entre les convertisseurs mis en parallèle. Comme nous allons le décrire au travers des figures suivantes, le dispositif selon l'invention permet de limiter les courants de circulation au moyen de la première et/ou de la seconde approche théorique, tout en s'affranchissant des limites des solutions existantes.

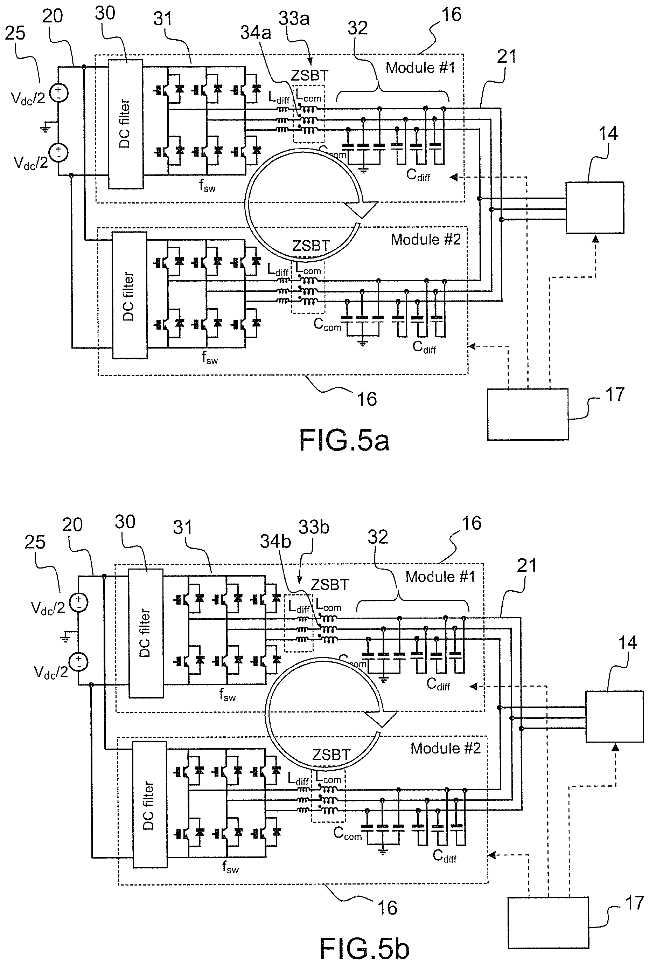

La **figure 5a** représente un premier mode de réalisation d'un dispositif d'alimentation électrique comprenant des moyens pour limiter des courants de recirculation hautes fréquences. Dans cet exemple, deux convertisseurs 16, alimentés en énergie électrique par un même réseau continu 25, sont affectés, par un organe de commande 17 , à une charge 14. Les deux convertisseurs 16 assurent la conversion et l'alimentation de la charge 14 en tension alternative triphasée. Chaque convertisseur 16 comprend, entre une entrée 20 et une sortie 21, des moyens de filtrage 30 de l'énergie fournie par le réseau 25, des moyens de conversion DC/AC 31, et des moyens de filtrage 32 des signaux alternatifs générés par les moyens de conversion 31. Les moyens de filtrage 30 et 32 et les moyens de conversion 31 sont des composants classiques bien connus de l'homme de métier. Leur fonctionnement n'est pas décrit en détail ici.

Chacun des convertisseurs 16 comprend également des moyens distribués 33a configurés pour générer une impédance de séquence zéro élevée s'opposant à la création de courant de recirculation entre les convertisseurs associés en parallèle. Dans cet exemple, les moyens distribués 33a comprennent un transformateur de séquence zéro 34a reliant les moyens de conversion 31 aux moyens de filtrage 32. Dans chaque convertisseur, et indépendamment des autres convertisseurs, le transformateur de séquence zéro 34a couple les trois phases du convertisseur en forçant la somme iₐ+i_{b}+i_{c}=i₀ de chaque convertiseur à des valeurs proches de zéro. Au niveau système, cela correspond a génèrer une impédance de séquence zéro élevée, permettant de s'opposer à la création de courant de recirculation haute fréquence entre les convertisseurs.

Les transformateurs de séquence zéro 34a, aussi appelés transformateurs de blocage de séquence zéro, peuvent être implémentés en utilisant une structure magnétique de type inductance de mode commun.

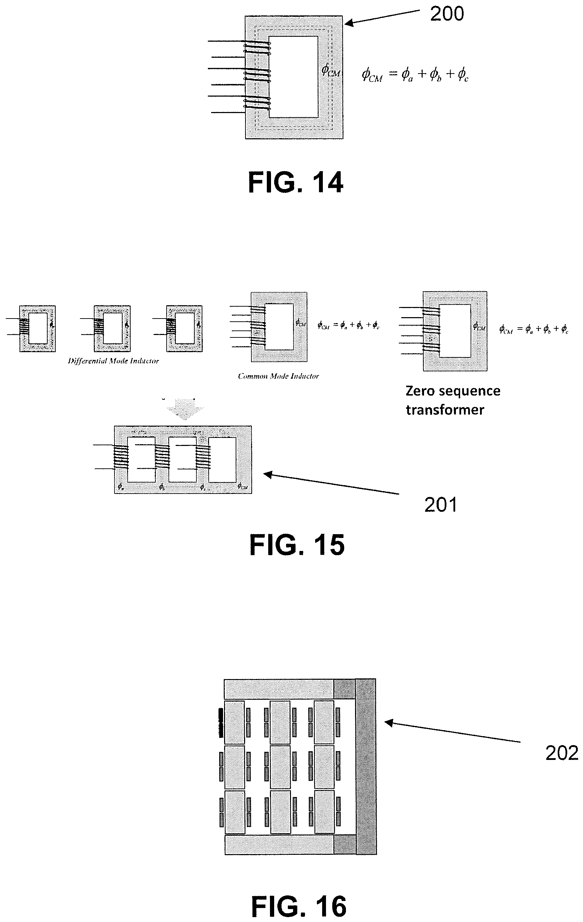

L'impédance de séquence zéro élevée est générée en utilisant un corps magnétique 200 couplant simultanément les trois phases de sortie de chaque module de puissance, comme représenté sur la **figure 14****.** Ce couplage est régi par l'équation magnétique FluxA+FluxB+FluxC=Lseq_zero*(Ia+Ib+Ic). Le paramètre Lseq_zero est déterminé par la géométrie physique du corps magnétique et le nombre de tours des enroulements. L'objectif est, par design de la géométrie et du nombre de tours des enroulements, de maximiser Lseq_zero afin de minimiser les courants de recirculation.

La réalisation du core magnétique peut être faite, par exemple, à partir d'un core type toroïde avec trois enroulements. Il est aussi possible de réaliser le transformateur de mode commun avec un circuit à trois jambes où les trois enroulements sont positionnés sur la jambe centrale. Enfin comme illustré sur la **figure 14****,** un circuit à deux jambes peut être utilisé avec les trois enroulements positionnés sur une jambe.

Additionellement, l'application de techniques d'intégration magnétique permet de déterminer une structure magnétique compacte et monobloc 201 intégrant les composants de transformateur de séquence zéro avec le filtrage de mode commun et de mode différentiel pour un convertisseur de type onduleur / redresseur. La solution proposée permet d'intégrer les trois inductances de mode différentiel et l'inductance de mode commun et les transformateurs de zéro séquence dans une structure magnétique monobloc compacte comportant 4 jambes et trois enroulements. Cette solution permet la mutualisation du core magnétique et des bobinages entre les inductances de mode différentiel et l'inductance de mode commun, comme représenté sur la **figure 15****.**

L'intégration de l'ensemble des éléments nécessaires pour les transformateurs de séquence zéro, le filtrage de mode différentiel en un ensemble magnétique monobloc permet d'optimiser le poids et volume en mutualisant le core magnétique entre les trois inductances. De plus, l'intégration d'un ensemble monobloc permet aussi d'améliorer le poids et le volume grâce à la diminution des accessoires nécessaires pour le packaging et l'interconnexion des éléments magnétiques.

L'ensemble magnétique monobloc est constitué d'un core magnétique avec quatre jambes. Trois des jambes avec leurs bobinages associés jouent le rôle des inductances différentielles pour la phase considérée. Une quatrième jambe sans bobinage joue le rôle de l'inductance de mode commun. L'ensemble monobloc magnétique est identique en terme d'équation magnétique au transformateur de séquence zéro, aux trois inductances monophasées et l'inductance de mode commun comme illustrée par les modélisations par circuit à réluctances de la figure 15.

La **figure 16** illustre un exemple d'implémentation d'un ensemble magnétique monobloc compact 202 regroupant les éléments magnétiques nécessaires au filtrage de mode commun et de mode différentiel pour un convertisseur de forte puissance de type onduleur / redresseur triphasé. Une implémentation de l'élément magnétique compact monobloc peut utiliser pour les jambes différentielles un matériau à haute induction avec un entrefer discret réparti de façon à minimiser les pertes à hautes fréquences. Il est également possible d'implémenter un entrefer distribué en adaptant le matériau utilisé. L'inductance de mode commun est implémentée par l'addition d'une quatrième jambe au bloc triphasé différentiel. La jambe de mode commun peut être implémentée à l'aide de matériaux à haute perméabilité magnétique comme des matériaux nanocristallins.

Autrement dit, ce premier mode de réalisation s'appuie sur la première approche théorique de réduction des courants de recirculation décrite dans le cadre de la figure 4. Le transformateur de séquence zéro 34a génère une impédance de séquence zéro en couplant pour chaque convertisseur, chacune des phases au travers du corps magnétique. L'impédance générée s'oppose à la création d'un courant de mode de recirculation par la différence de tension de mode commun entre les convertisseurs. Ces transformateurs sont dimensionnés de façon similaire à une self de filtrage de mode commun. Des solutions technologiques simples et maitrisées, tels que des noyaux magnétiques en tore ou en E en matériaux nanocristallins, peuvent être mises en œuvre pour obtenir des valeurs d'impédance forte permettant de limiter les courants de recirculation a des valeurs relativement faible.

La **figure 5b** représente un second mode de réalisation d'un dispositif d'alimentation électrique comprenant des moyens pour limiter des courants de recirculation hautes fréquences. Comme pour le mode de réalisation précédent, deux convertisseurs 16, alimentés en énergie électrique par un même réseau continu 25, sont affectés, par un organe de commande 17 , à une charge 14. Les deux convertisseurs 16 assurent la conversion et l'alimentation de la charge 14 en tension alternative triphasée. Chaque convertisseur 16 comprend, entre une entrée 20 et une sortie 21, des moyens de filtrage 30 de l'énergie fournie par le réseau 25, des moyens de conversion DC/AC 31, et des moyens de filtrage 32 des signaux alternatifs générés par les moyens de conversion 31.

Chacun des convertisseurs comprend également des moyens distribués 33b configurés pour générer une impédance de séquence zéro élevée s'opposant à la création de courant de recirculation entre les convertisseurs associés en parallèle. Dans cet exemple, les moyens distribués 33b comprennent pour chacune des phases une inductance de mode différentiel, ou autrement dit une inductance différentielle triphasée 34b reliant les moyens de conversion 31 aux moyens de filtrage 32. Les inductances de mode différentiel sont perçues par la composante différentielle et la composante de mode commun du courant. En fonction de leur valeur, les inductances de mode différentiel dans chaque convertisseur réduisent la somme iₐ+i_{b}+i_{c}=i₀ de chaque convertisseur à des valeurs proches de zéro. Au niveau système, elles contribuent a générer une impédance de séquence zéro élevée, permettant de s'opposer à la création de courant de recirculation haute fréquence entre les convertisseurs.

Ainsi, ce second mode de réalisation s'appuie également sur la première approche théorique de réduction des courants de recirculation décrite dans le cadre de la figure 4. Les inductances de mode différentiel génèrent une impédance de séquence zéro. Ces inductances sont dimensionnées de façon similaire à une self de filtrage de mode différentielle. Leur dimensionnement peut faire l'objet d'une optimisation au niveau système. Une forte valeur d'inductance de mode différentiel dans chaque module permet de réduire le courant de mode commun à une valeur faible. Mais une forte valeur d'inductance de mode différentiel est pénalisante en termes de poids et volume, malgré les nouveaux matériaux magnétiques. A l'inverse une plus faible valeur d'inductance de mode différentiel augmente la valeur du courant de recirculation et donc l'ondulation et les courants de crêtes dans les phases des moyen de conversions. On sait également qu'un courant élevé dans les interrupteurs des moyens de conversion est néfaste pour leur fonctionnement. Ainsi, l'optimisation de la valeur d'inductance de mode différentiel résulte d'un compromis entre la valeur des courants de crêtes par phase, les courants de recirculation, et la définition des interrupteurs. Typiquement, une valeur optimisée d'inductance de mode différentiel permet d'obtenir une ondulation compatible de la définition des interrupteurs, en minimisant les pertes par commutation en réalisant une commutation douce, sans perte par commutation à l'amorçage pour les interrupteurs et sans perte par commutation pour les diodes au blocage.

Il est intéressant de noter que pour respecter les spécifications EMI, il est nécessaire d'implémenter dans les convertisseurs 16 un filtrage de mode différentiel. Le filtrage de mode différentiel est équivalent à des selfs de mode différentiel. Une optimisation supplémentaire est donc l'intégration dans chacun des convertisseurs des selfs de mode différentiel pour limiter le courant de recirculation avec les selfs de mode différentiel nécessaires au respect des spécifications EMI. Ceci permet de coupler les moyens pour limiter les courants de recirculation et les inductances de mode différentiel nécessaire aux exigences EMI au moyen d'un unique composant magnétique. Autrement dit, un dimensionnement approprié des inductances de mode différentiel permet d'intégrer la fonction des moyens de limitation des courants de recirculation permettant avantageusement de limiter le poids du filtrage global, sans entraîner l'implémentation de composants supplémentaires.

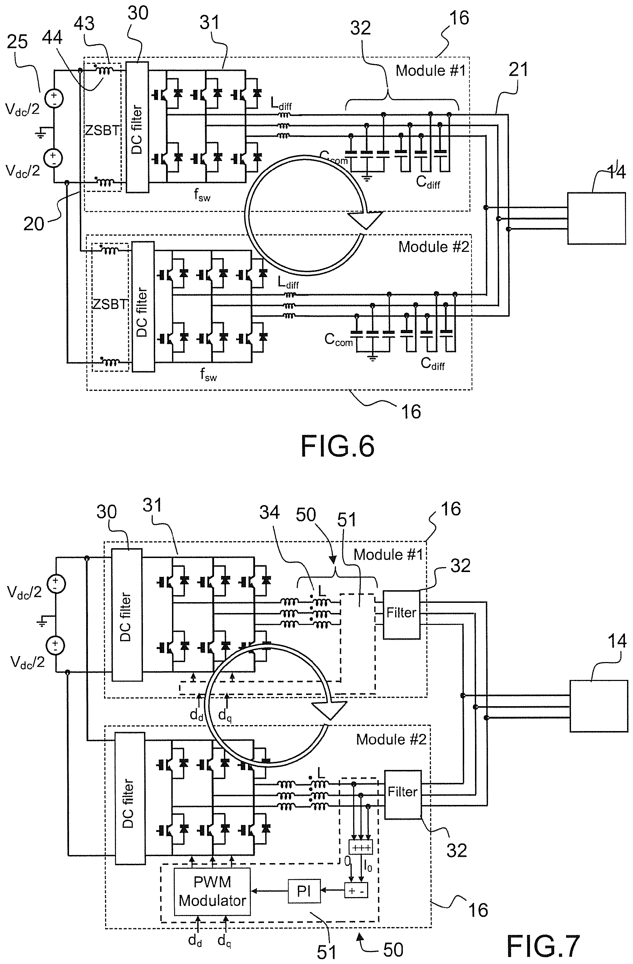

La **figure 6** représente un second mode de réalisation d'un dispositif d'alimentation électrique selon l'invention. Comme précédemment, deux convertisseurs 16, alimentés par le réseau continu 25 sont affectés par un organe de commande (non représenté sur cette figure) à une charge 14. Chaque convertisseur 16 comprend, entre une entrée 20 et une sortie 21, des moyens de filtrage 30 de l'énergie fournie par le réseau 25, des moyens de conversion 31, et des moyens de filtrage 32 des signaux alternatifs générés par les moyens de conversion 31.

Chacun des convertisseurs 16 comprend également des moyens distribués 43 configurés pour générer une impédance de séquence zéro élevée s'opposant à la création de courant de recirculation entre les convertisseurs associés en parallèle. Dans cet exemple, les moyens distribués 43 sont disposés à l'entrée 20 des convertisseurs 16 et comprennent pour chaque polarité du réseau continu 25, un transformateur 44 reliant l'entrée 20 aux moyens de conversion 31.

Autrement dit, ce second mode de réalisation met en œuvre un transformateur de mode blocage de séquence zéro dans chaque convertisseur. Chaque transformateur crée une impédance de séquence zéro en couplant les deux polarités d'entrée de chaque convertisseur au travers du corps magnétique du transformateur. Comme précédemment, l'impédance générée s'oppose à la création d'un courant de mode de recirculation par la différence de tension de mode commun entre les convertisseurs. Les solutions technologiques déjà mentionnées, tels que des noyaux magnétiques en tore ou en E, en matériaux de type nanocristallin, peuvent avantageusement être mises en œuvre.

Il est intéressant de noter que pour respecter les spécifications EMI le système de convertisseur a besoin d'implémenter un filtrage de mode commun. Typiquement ce filtrage de mode commun correspond à une self de mode commun couplant les trois phases de sortie des convertisseurs. Une optimisation supplémentaire est donc l'intégration dans chacun des modules des transformateurs de blocage de zéro séquence avec l'inductance de mode commun nécessaire pour les filtrages du bruit de découpage de mode commun. Ceci permet l'implémentation du transformateur de blocage de zéro séquence et l'inductance de mode commun en un seul élément magnétique. Le dimensionnement approprié des transformateurs de blocage de séquence zéro permet donc d'intégrer la fonction de filtrage de mode commun minimisant ainsi le poids du filtrage global. L'intégration dans chacun des modules de ces dispositifs de blocage de courant de recirculation et du filtrage de mode commun permet de ne pas rajouter d'élément supplémentaire pour la parallélisassion des modules.

La **figure 7** représente un quatrième mode de réalisation d'un dispositif d'alimentation électrique comprenant des moyens complémentaires pour limiter des courants de recirculation basses fréquences. Les trois premiers modes de réalisation décrits respectivement en figures 5a, 5b et 6 mettent en œuvre des moyens distribués dans chacun des convertisseurs capables de limiter les courants de recirculation hautes fréquences. Le quatrième mode de réalisation décrit par la figure 7 comprend des moyens distribués semblable au premier mode de réalisation, comprenant un transformateur de séquence zéro 34 permettant de limiter les courants de recirculation hautes fréquences. Le quatrième mode de réalisation a pour but de limiter également les courants de recirculation basses fréquences. Pour cela, il associe aux transformateurs de blocage de séquence zéro limitant les courants de recirculation hautes fréquences, un régulateur de séquence zéro pour limiter les courants de recirculation basses fréquences. Le régulateur de séquence zéro peut être associé à des transformateurs implémentés dans les filtres d'entrée ou dans les filtres de sortie. Sur la figure 7, chaque convertisseur 16 comprend des moyens de filtrage 30 de l'énergie fournie par le réseau continu 25, des moyens de conversion 31, et des moyens de filtrage 32 des signaux alternatifs générés par les moyens de conversion 31. Chaque convertisseur comprend également des moyens distribués 50 configurés pour générer une impédance de séquence zéro élevée s'opposant à la création de courant de recirculation entre les convertisseurs associés en parallèle. Les moyens distribués 50 comprennent d'une part un transformateur de séquence zéro reliant les moyens de conversion 31 aux moyens de filtrage 32, et d'autre part un régulateur de séquence zéro 51. Le régulateur de séquence zéro 51 comprend des moyens pour mesurer les courants de phase iₐ, i_{b} et i_{c} en sortie des transformateurs 34, calculer le courant de mode commun iₐ+i_{b}+i_{c}, et piloter les moyens de conversion 31 avec pour consigne de régulation un courant de mode commun nul. Autrement dit, le régulateur 51 permet de réduire les courants de recirculation basses fréquences en asservissant la composante basse fréquence du courant de recirculation à zéro en contrôlant la tension de mode commun par les consignes PWM des éléments de conversion 31. Une possibilité de variable de contrôle pour la tension de mode commun est la répartition du vecteur zéro des consignes PWM entre le vecteur (1,1,1) et le vecteur (0,0,0). Le temps du vecteur (1,1,1) peut être égal au temps du vecteur (0,0,0). Pour une longueur donnée du vecteur zéro, le contrôleur de séquence zéro peut agir sur la répartition entre le vecteur (1, 1, 1) et le vecteur (0,0,0) et asservir la tension de mode commun en sortie du convertisseur pour contrôler la courant de recirculation basse fréquence à zéro. Chaque convertisseur contrôle ainsi de manière indépendante son courant de recirculation, permettant au niveau du dispositif d'alimentation d'annuler l'ensemble des courants de recirculation sans utiliser de correcteur commun. Le principe de ce régulateur de séquence zéro distribué dans chaque convertisseur permet d'annuler les courants de recirculation basses fréquences. Ce régulateur peut être implémenté de différentes façons en fonction des applications considérées et des topologies des convertisseurs.

La **figure 8** représente un cinquième mode de réalisation d'un dispositif d'alimentation électrique selon l'invention. Contrairement aux trois précédents, ce cinquième mode de réalisation s'appuie sur la seconde approche théorique de réduction des courants de recirculation décrite dans le cadre de la figure 4. Ce mode de réalisation se base sur l'annulation de la tension de mode commun de chacun des convertisseurs ; ou autrement dit sur des moyens de filtrage actif de la tension de mode commun. Pour cela, chaque convertisseur comprend un bras de découpage supplémentaire.

Comme pour les figures précédentes, chaque convertisseur 16 comprend des moyens de filtrage 30 de l'énergie fournie par le réseau continu 25, des moyens de conversion 31, et des moyens de filtrage 32 des signaux alternatifs triphasés générés par les moyens de conversion 31. Chaque convertisseur comprend en outre des moyens distribués 60 pour limiter des courants de recirculation générés par l'association en parallèle de plusieurs convertisseurs. Les moyens distribués 60 comprennent un élément de conversion supplémentaire 61, intégré aux moyens de conversion 31, et un élément de filtrage 62. Ces moyens distribués 60 constituent ainsi un bras de découpage supplémentaire, associé aux trois bras de découpage de chacune des phases. Les moyens distribués 60 sont pilotés, en particulier la commande d'ouverture de rapport cyclique, ou PWM, de l'élément de conversion 61, de manière à annuler la tension de mode commun des trois phases. Autrement dit, le quatrième bras permet par un pilotage adapté en PWM de contrôler la tension de mode commun de chaque convertisseur. Il est possible d'asservir la tension de mode commun de chaque convertisseur, avec pour consigne de régulation un courant de recirculation nul.

La figure 8 décrit le principe du filtrage actif de la tension de mode commun dans le cas d'une conversion électrique en trois phases. Cet exemple n'est pas limitatif, il est envisagé plus largement des moyens distribués 60 comprenant un élément de conversion supplémentaire intégré à des moyens de conversion électrique en N1 phases.

La **figure 9** représente l'association en parallèle de N convertisseurs au moyen d'un dispositif d'alimentation électrique selon l'invention. Le cas le plus courant de convertisseurs alimentés par un réseau continu et délivrant des tensions alternatives triphasés ne constitue pas une limite à la présente invention. Comme représenté sur la figure 9, le dispositif d'alimentation peut comprendre N convertisseurs, alimentés par un réseau d'énergie électrique en N2 phases, assurant la conversion et l'alimentation de charges en N1 phases. Divers types de moyens de conversion 31 peuvent être mis en œuvre (AC/AC, DC/AC, AC/DC, DC/DC).

La **figure 10** représente l'architecture fonctionnelle d'un organe de commande mis en œuvre dans le dispositif d'alimentation. On a précisé que le dispositif d'alimentation selon l'invention comprenait un organe de commande 17 capable d'allouer en temps réel à une charge, un ou plusieurs convertisseurs. Nous allons décrire un mode de réalisation privilégié de cet organe de commande chargé de l'allocation des convertisseurs et de leur pilotage. L'organe de commande envisagé par la présente invention assure le pilotage de l'ensemble du dispositif d'alimentation par diverses focntions. Il gère en particulier l'association en parallèle des convertisseurs, le pilotage d'algorithmes de commande des charges, l'entralaçage entre les convertisseurs, ou encore le pilotage d'algorithme de contrôle propre aux convertisseurs indépendamment des charges.

L'organe de commande peut être scindé en plusieurs modules en fonction de critères fonctionnels et temporels. Parmi les critères fonctionnels, l'architecture de l'organe de commande retenue tient compte en particulier du type de conversion réalisée, de la structure interne du convertisseur, de l'algorithme de contrôle de la charge, ou des reconfigurations possible du dispositif d'alimentation. Parmi les critères temporels, il est tenu compte des constantes de temps des fonctions de protection, des constantes de temps électro-mécanique, des bandes passantes des algorithme de contrôle, et des fréquences d'échantillonage et de découpage.

Comme représenté sur la figure 10, il est envisagé un organe de commande 17 comprenant, en plus d'un étage de puissance 100, trois modules de pilotage : un module de pilotage bas niveau 101, un module de pilotage intermédiaire 102 et un module de pilotage système 103. Le principe et des modes de réalisation de ces modules de pilotage sont décrits sur les figures suivantes.

La **figure 11** représente un mode de réalisation d'un module de pilotage bas niveau de l'organe de commande, Ce module 101 est en charge des taches rapides dédiées à la conversion d'énergie électrique, ainsi que des taches de protection associées. Un module de pilotage bas niveau est associé à chaque convertisseur du dispositif. Il est préférentiellement implémenté dans un dispositif électronique intégré dans le convertisseur. par exemple avec l'étage de puissance. Alternativement, les modules de pilotage bas niveau des convertisseurs peuvent être rassemblés dans un dispositif électronique central. Le module de pilotage bas niveau 101 associé à un convertisseur est indépendant de la charge électrique.

La commande rapprochée est désignée pour assumer les taches rapides et orientées sur la conversion d'énergie et la protection associée. Cette commande est indépendante de la charge et de ses algorithmes de contrôles dédiés. La commande rapprochée fait partie intégrante des éléments de conversion rendant ces éléments intelligents et capables de s'interfacer avec une couche applicative de plus haut niveau. La commande rapprochée gère aussi les interactions inter et intra modules dues à l'entrelacage et à la mise en parallèle de ces modules. La commande rapprochée inclut les éléments de contrôle des courants de recirculation basse fréquence avec un contrôleur des courants de zéro séquence intégré agissant sur la commande PWM pour maintenir le courant de recirculation basse fréquence à zéro.

Le module de pilotage bas niveau 101 comprend pour chacun des convertisseurs des moyens de régulation des courants I_{d}, I_{q} et I₀. Le contrôle de courant i₀ assure l'asservissement du courant de recirculation à zéro en agissant sur la commande PWM du convertisseur. Le contrôle des courants I_{d} et I_{q} assure l'asservissement des courants de sortie de chacun des convertisseurs sur des valeurs de consigne transmise par le module de pilotage intermédiaire dans une relation maitre/esclave. Cette configuration particulière permet un équilibrage des courants entre les convertisseurs associés en parallèle.

Dans le cas où les convertisseurs comprennent des moyens pour limiter des courants de recirculation basses fréquences, au moyen d'un régulateur de séquence zéro 51 décrit par la figure 7, le module de pilotage bas niveau 101 assure la commande en PWM du régulateur. Dans le cas où les convertisseurs comprennent des moyens de filtrage actif de la tension de mode commun 60, au moyen d'un bras de conversion supplémentaire 61 décrit par la figure 8, le module de pilotage bas niveau 101 assure la commande du bras de conversion supplémentaire.

Le pilotage bas niveau est propre à chacun des convertisseurs, et est indépendant des paramètres du pilotage intermédiaire et du pilotage système.

Comme représenté sur la figure 11, la commande rapprochée est en charge des taches decontrôle dédiées à la conversion comme par exemple :
- PWM modulation et génération
- Gâte drivers
- Current mode control
- Over-current et over-temperature protection
- Contrôle des courants de recirculation basses fréquences
- Contrôle des courants de recirculation hautes fréquences pour solution active

L'incorporation de cette commande dans les éléments de conversion les rend génériques et découple les taches liées à la conversion des taches liées au contrôle applicatif ou système. Ceci accentue la possibilité de création d'un système modulaire et d'une plateforme ouverte basée sur des modules de conversion génériques indépendants des applications.

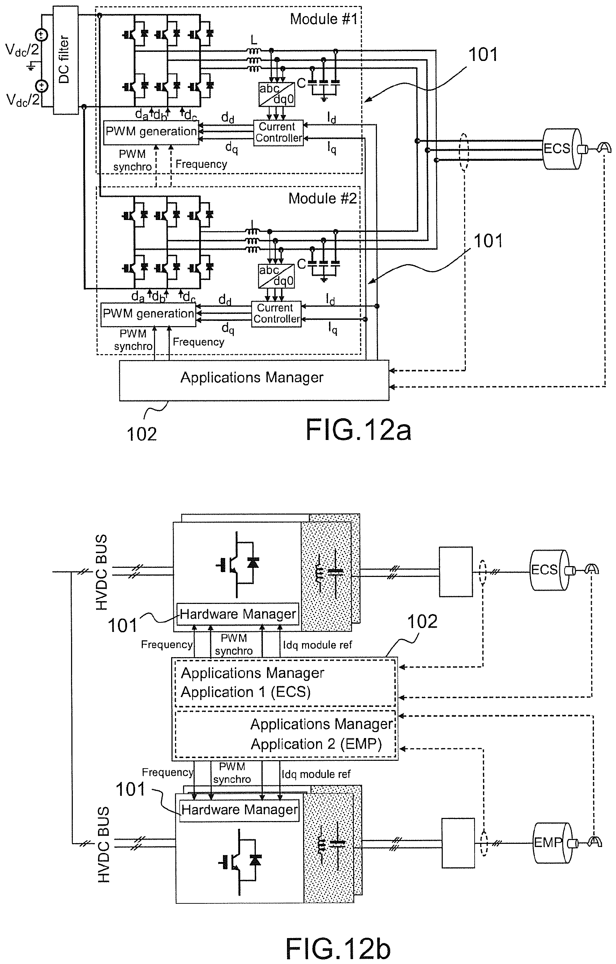

Les **figures 12a et 12b** représentent un mode de réalisation d'un module de pilotage intermédiaire de l'organe de commande, Ce module 102 est en charge des taches dédiées au contrôle des charges électriques 14, des taches d'entrelaçage et de mise en parallèle des convertisseurs. Le module de pilotage intermédiaire 102 commande les modules de pilotage bas niveau 101 des convertisseurs dans une relation maitre/esclave. Cette relation est par exemple illustrée par la figure 12a qui représente un module de pilotage intermédiaire assurant la commande des modules de pilotage bas niveau 101 de deux convertisseurs mis en parallèle pour l'alimentation d'une charge électrique 14. Le pilotage intermédiaire 102 transmet aux convertisseurs des valeurs de consignes de pilotage adaptées à l'allocation entre les convertisseurs et les charges. Il transmet par exemple des consignes portant sur le type de conversion à réaliser, la fréquence de découpage, le type de PWM ou encore des consignes portant sur l'entrelaçage et la mise en parallèle en temps réel.

Le module de pilotage intermédiaire est indépendant des taches de conversion d'énergie prises en charge par les modules de pilotage bas niveau. Il en assure simplement la commande. A titre d'exemple, les algorithmes de commande sans capteur de compresseur, de pompe hydraulique ou de démarreur, ou encore les algorithmes de régluation de bus (par exemple de type 400Hz CF, ou 28Vdc) ou de charge de batterie seront implémentés dans le module de pilotage intermédiaire.

Le cerveau applicatif est complètement indépendant et découplé des taches de conversion et de conditionnement d'énergie assumées par les commandes rapprochées.

Comme représenté sur la figure 12b, le module de pilotage intermédiaire est configuré pour assurer le contrôle simultané de plusieurs charges électriques. Pour chacune des charges électriques, un contrôle de niveau intermédiaire assure la commande des modules de pilotage bas niveau de chacun des convertisseurs mis en parallèle pour l'alimentation de la charge.

Il est aussi envisagé par la présente invention de mettre en œuvre plusieurs modules de pilotage intermédiaire pour assurer une redondance de la commande associée. Le module de pilotage intermédiaire peut être implémenté dans un module électronique indépendant avec redondance.

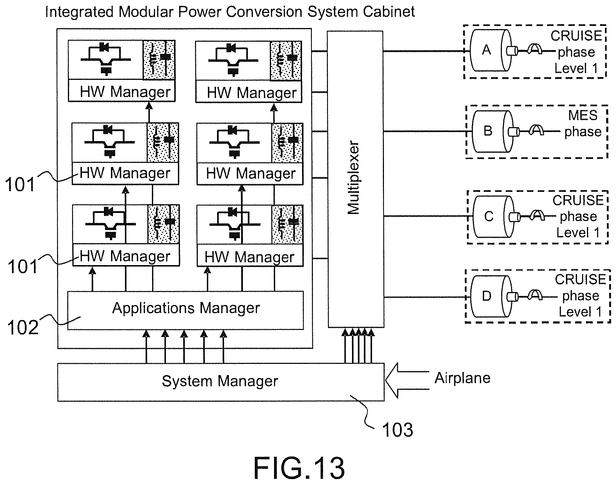

La **figure 13** représente un mode de réalisation d'un module de pilotage système de l'organe de commande. Ce module 103 est en charge des taches de supervision et de surveillance. Le module de pilotage système 103 assure l'allocation en temps réels de convertisseurs aux charges électriques. Il coordonne ensuite la commande des modules de pilotage intermédiaire 102 et défini leurs paramètres de consigne. Le module de pilotage système 103 s'interface avec l'aéronef, et reconfigure le dispositif d'alimentation électrique en fonction des informations transmises par l'aéronef. Il gère également les dispositifs de protection et les défaillances des modules de pilotage intermédiaire 102.

Il est envisagé de mettre en œuvre plusieurs modules de pilotage système pour assurer une redondance de la commande associée. Le module de pilotage système peut être implémenté dans un module électronique indépendant avec redondance. Il peut aussi être implémenté dans un organe de commande redondant existant, comme par exemple le BPCU ou tout autre organe de commande redondant présent dans l'aéronef.

Cette architecture fonctionnelle particulière de l'organe de commande est avantageuse car elle permet une architecture électrique modulaire et une plateforme de développement ouverte. Les taches de bas niveau sont masquées et découplées des taches de niveau hiérarchique supérieur. Le système est entièrement modulaire et reconfigurable à partir de convertisseurs indépendants des charges électriques et du réseau de fourniture d'énergie électrique. Cette configuration permet d'optimiser la puissance électrique installée dans l'aéronef par l'allocation en temps réel du partage des ressources de conversion entre les N charges. Cette configuration permet aussi d'optimiser le filtrage compris dans les convertisseurs par leur entrelaçage au niveau système, du côté source et du côté charge.

Cette architecture modulaire constitue une plateforme de développement ouverte, permettant l'intégration d'éléments de partenaires industriels différents sans difficulté particulière d'interfaçage avec le reste du dispositif.

L'architecture proposée est une solution générique et une plateforme modulaire permettant d'intégrer de multiples fonctions partageant les mêmes ressources de conversion. Cette architecture combine de multiples fonctions dans un centre de conversion de puissance permettant de réduire le poids et les coûts en éliminant le besoin de convertisseurs dédiés aux différentes applications. La figure 13 illustre un cabinet intégrant quatre applications (A, B, C, D) au sein du cerveau applicatif.

L'architecture proposée est basée sur une architecture ouverte permettant l'intégration d'applications de tierces parties sans difficultés de propriétés intellectuelles ou d'interfaces. Elle permet l'intégration de fonctions développées par différents fournisseurs au sein du même cabinet.

L'architecture de contrôle distribuée et partitionnée, combinée avec haute intégrité computing, permet une opération sûre de différentes fonctions dans le système avec une architecture ouverte. Chaque partenaire reçoit une brique standard de puissance, un jeu d'outil de développement et un ensemble de règles de développement pour le développement de leurs algorithmes de contrôle et software code. Quand le partenaire termine le développement de l'algorithme de contrôle et du software, le software est uploadé dans le cerveau applicatif du cabinet sans problème de compatibilité ou de propriétés intellectuelles.

## Revendications

1. Dispositif d'alimentation d'une pluralité de charges (14) à partir d'un réseau de fourniture d'énergie électrique (25), comprenant plusieurs convertisseurs en parallèle (16), alimentés en énergie électrique par le réseau (25), assurant la conversion et l'alimentation en énergie électrique d'au moins une charge (14) de la pluralité de charges, comprenant un organe de commande (17) configuré pour associer les plusieurs convertisseurs (16) pour alimenter l'au moins une charge (14), en réponse à un besoin de puissance de l'au moins une charge (14), **caractérisé en ce que** chacun des convertisseurs (16) délivre de l'énergie électrique à l'au moins une charge en N1 phases, et **en ce que** chacun des convertisseurs (16) comprend des moyens distribués (33, 43, 50, 60) comprenant un transformateur de séquence zéro (34a) couplant les N1 phases, configurés pour générer une impédance de séquence zéro prédéfinie permettant de s'opposer, pour chaque phase, à la création de courant de recirculation haute fréquence entre les convertisseurs (16), pour limiter des courants de recirculation générés par l'association en parallèle des plusieurs convertisseurs (16).

2. Dispositif selon la revendication 1, dont chacun des convertisseurs (16) comprend des moyens de filtrage (32) associés au transformateur (34) de chacune des N1 phases.

3. Dispositif selon la revendication 1 ou 2, dont chacun des convertisseurs (16) délivre de l'énergie électrique alternative triphasée à l'au moins une charge (14).

4. Dispositif selon l'une des revendications 1 à 3, dont les moyens distribués (50) de chacun des convertisseurs (16) comprennent un régulateur de séquence zéro (50) configuré pour asservir la tension de mode commun de chacun des convertisseurs (16) de manière à annuler le courant de mode commun des N1 phases, permettant de s'opposer à la création de courant de recirculation basse fréquence entre les convertisseurs (16).

5. Dispositif selon la revendication 1, dont les moyens distribués (60) de chacun des convertisseurs (16) comprennent un élément de conversion (61) complémentaire aux moyens de conversion (31) en N1 phases et un élément de filtrage (62), permettant un filtrage actif de tension de mode commun dans chacun des convertisseurs (16), de sorte à annuler des différences de tensions de mode commun entre les convertisseurs (16) associés en parallèle.

6. Dispositif d'alimentation d'une pluralité de charges (14) à partir d'un réseau de fourniture d'énergie électrique (25), comprenant plusieurs convertisseurs en parallèle (16), alimentés en énergie électrique par le réseau (25), assurant la conversion et l'alimentation en énergie électrique d'au moins une charge (14) de la pluralité de charges,
comprenant un organe de commande (17) configuré pour associer les plusieurs convertisseurs (16) pour alimenter l'au moins une charge (14), en réponse à un besoin de puissance de l'au moins une charge (14),
**caractérisé en ce que** chacun des convertisseurs (16) est alimenté en énergie électrique par le réseau de fourniture (25) en N2 phases, et **en ce que** chacun des convertisseurs (16) comprend des moyens distribués (33, 43, 50, 60)_comprenant un transformateur (44) couplant les N2 phases, configuré pour générer une impédance de séquence zéro permettant de s'opposer, pour chaque phase, à la création de courant de recirculation haute fréquence entre les convertisseurs

7. Dispositif selon la revendication 6, dont chacun des convertisseurs (16) comprend des moyens de filtrage (30) associés au transformateur (44) couplant les N2 phases.

8. Dispositif selon la revendication 6 ou 7, dont chacun des convertisseurs (16) est alimenté en énergie électrique par un réseau électrique continu (25).

## Patentansprüche

1. Speisungsvorrichtung einer Vielzahl von Lasten (14) ab einem Elektroenergieversorgungsnetz (25), umfassend mehrere parallele Umwandler (16), welche mit elektrischer Energie durch das Netz (25) versorgt werden, welche die Umwandlung und die Speisung mit elektrischer Energie mindestens einer Last (14) der Vielzahl von Lasten sicherstellen,
umfassend ein Steuerungsorgan (17), welches konfiguriert ist, um die mehreren Umwandler (16) zur Speisung der mindestens einen Last (14) in Reaktion auf einen Leistungsbedarf der mindestens einen Last (14) zuzuordnen,
**dadurch gekennzeichnet, dass** jeder der Wandler (16) elektrische Energie an die mindestens eine Last in N1 Phasen abgibt, und dadurch, dass jeder der Wandler (16) verteilte Mittel (33, 43, 50, 60) umfasst, umfassend einen Null-Sequenz-Transformator (34a), welcher die N1 Phasen koppelt, welche konfiguriert sind, um eine vorbestimmte Null-Sequenz-Impedanz zu erzeugen, welche es ermöglicht, sich für jede Phase der Schaffung von hochfrequentem Rezirkulationsstrom zwischen den Umwandlern (16) zu widersetzen, um die durch die Parallelschaltung der mehreren Umwandler (16) erzeugten Rezirkulationsströme zu begrenzen.

2. Vorrichtung nach Anspruch 1, wobei jeder der Umwandler (16) Filterungsmittel (32) umfasst, welche dem Transformator (34) einer jeden der N1 Phasen zugeordnet sind.

3. Vorrichtung nach Anspruch 1 oder 2, wobei jeder der Umwandler (16) elektrische Wechselstromenergie mit drei Phasen an die mindestens eine Last (14) abgibt.

4. Vorrichtung nach einem der Ansprüche 1 bis 3, deren verteilte Mittel (50) eines jeden der Umwandler (16) einen Null-Sequenz-Regler (50) umfassen, welcher konfiguriert ist, um die Gleichtaktspannung eines jeden der Umwandler (16) dergestalt nachzuführen, dass der Gleichtaktstrom der N1 Phasen aufgehoben wird, wodurch es möglich ist, sich der Schaffung von niederfrequentem Rezirkulationsstrom zwischen den Umwandlern (16) zu widersetzen.

5. Verfahren nach Vorrichtung 1, deren verteilte Mittel (60) eines jeden der Umwandler (16) ein ergänzendes Umwandlungselement (61) zu den Umwandlungsmitteln (31) in N1 Phasen und ein Filterungsmittel (62) umfassen, welches eine aktive Filterung der Gleichtaktspannung in jedem der Umwandler (16) dergestalt ermöglicht, dass Differenzen zwischen Gleichtaktspannungen zwischen den parallel geschalteten Umwandlern (16) aufgehoben werden.

6. Speisungsvorrichtung einer Vielzahl von Lasten (14) ab einem Elektroenergieversorgungsnetz (25), umfassend mehrere parallele Umwandler (16), welche mit elektrischer Energie durch das Netz (25) versorgt werden, welche die Umwandlung und die Speisung mit elektrischer Energie mindestens einer Last (14) der Vielzahl von Lasten sicherstellen,
umfassend ein Steuerungsorgan (17), welches konfiguriert ist, um die mehreren Umwandler (16) zur Speisung der mindestens einen Last (14) in Reaktion auf einen Leistungsbedarf der mindestens einen Last (14) zuzuordnen,
**dadurch gekennzeichnet, dass** jeder der Wandler (16) mit elektrischer Energie durch das Versorgungsnetz (25) in N2 Phasen versorgt wird, und dadurch, dass jeder der Wandler (16) verteilte Mittel (33, 43, 50, 60) umfasst, umfassend einen Transformator (44), welcher die N2 Phasen koppelt, welcher konfiguriert ist, um eine Null-Sequenz-Impedanz zu erzeugen, welche es ermöglicht, sich für jede Phase der Schaffung von hochfrequentem Rezirkulationsstrom zwischen den Umwandlern zu widersetzen.

7. Vorrichtung nach Anspruch 6, wobei jeder der Umwandler (16) Filterungsmittel (30) umfasst, welche dem Transformator (44) zugeordnet sind, welcher die N2 Phasen koppelt.

8. Vorrichtung nach Anspruch 6 oder 7, wobei jeder der Umwandler (16) mit elektrischer Energie durch ein elektrisches Gleichstromnetz (25) versorgt wird.

## Claims

1. Device for powering a plurality of loads (14) from an electrical energy supply network (25), comprising a plurality of converters in parallel (16), supplied with electrical energy by the network (25), ensuring the conversion and the supply of electrical energy for at least one load (14) of the plurality of loads,
comprising a control member (17) configured to associate said multiple converters (16) to power the at least one load (14), in response to a power requirement from the at least one load (14),
**characterised in that** each of the converters (16) delivers electrical energy to the at least one load in N1 phases, and **in that** each of the converters (16) comprises distributed means (33, 43, 50, 60) comprising a zero sequence transformer (34a) coupling the N1 phases, configured to generate a predefined zero-frequence impedance allowing, for each phase, to oppose the creation of high-frequency recirculation current between the converters (16), in order to curtail recirculation currents generated by the parallel association of the multiple converters (16).

2. Device according to claim 1, wherein each of the converters (16) comprises filtering means (32) associated with the transformer (34) of each of the N1 phases.

3. Device according to claim 1 or 2, wherein each of the converters (16) delivers three-phase alternating electrical energy to the at least one load (14).

4. Device according to one of claims 1 to 3, in which the distributed means (50) of each of the converters (16) comprise a zero-sequence regulator (50) configured to control the common-mode voltage of each of the converters (16) so as to cancel the common-mode current of the N1 phases, making it possible to oppose the creation of low-frequency recirculation current between the converters (16).

5. Device according to claim 1, in which the distributed means (60) of each of the converters (16) comprise a conversion element (61) complementing the conversion means (31) in N1 phases and a filtering element (62), allowing for an active filtering of common-mode voltage in each of the converters (16), so as to cancel common mode voltage differences between the parallel-associated converters (16).

6. Device for powering a plurality of loads (14) from an electrical energy supply network (25), comprising multiple converters in parallel (16), supplied with electrical energy by the network (25), ensuring the conversion and the supply of electrical energy for at least one load (14) of the plurality of loads,
comprising a control member (17) configured to associate said plurality of converters (16) to power the at least one load (14), in response to a power requirement from the at least one load (14),
**characterised in that** each of the converters (16) is supplied with electrical energy by the supply network (25) in N2 phases, and **in that** each of the converters (16) comprises distributed means (33, 43, 50, 60) comprising a transformer (44) coupling the N2 phases, configured to generate a predefined zero-frequence impedance allowing to oppose, for each phase, the creation of high-frequency recirculation current between the converters.

7. Device according to claim 6, wherein each of the converters (16) comprises filtering means (30) associated with the transformer (44) coupling the N2 phases.

8. Device according to claim 6 or 7, wherein each of the converters (16) is supplied with electrical energy by a DC electrical network (25).
